# EUROPÄISCHE PATENTANMELDUNG

(11) **EP 2 119 649 A1**
(43) Veröffentlichungstag der Anmeldung: **18.11.2009**
(21) Anmeldenummer: 08008957.6
(22) Anmeldetag: 14.05.2008
(51) Int. Cl.: B65G 53/46

(54) **Spannvorrichtung für einen Zuspeiser**

(71) Anmelder: Sika Technology AG, 6340 Baar (CH)
(72) Erfinder: Grab, Thomas, 8967 Widen (CH); Zehnder, Stefan, 5413 Birmenstorf (CH); Ulmann, Michael, 5442 Fislisbach (CH)

(57) **Zusammenfassung**

Bei einer Spannvorrichtung für einen Zuspeiser (1) umfasst diese einen Rotor (10), Rotorscheiben (12, 13), Deck- (4) und Gegenscheibe (7), wobei mittels eines Druckluftanschlusses (2) dem Zuspeiser Druckluft zugeführt wird, und wobei bei der Speisung von Material im Zuspeiser im Druckluftanschluss ein Gegendruck entsteht.

Zumindest in Teilbereichen sind die Rotorscheiben (12, 13), Deck- (4) und Gegenscheibe (7) mittels mindestens eines Druckelementes (20) in Abhängigkeit vom Gegendruck zusammengepresst.

## Beschreibung

### Technisches Gebiet

Die Erfindung geht aus von einer Spannvorrichtung für einen Zuspeiser nach dem Oberbegriff des ersten Anspruches.

### Stand der Technik

In Materialtransportanlagen, insbesondere Betonspritzanlagen, werden sogenannte Zuspeiser verwendet, wie diese beispielsweise im CH-Patent 579 697 eingehend beschrieben sind. Bei einer Ausführungsform wird das zu transportierende Betongemisch in einen über dem Rotor liegenden und in dessen Kammern mündenden Trichter zugespiesen. Um den Rotor dieses Zuspeisers nach aussen dicht zu halten, wird der Rotor über beidseitig angeordnete Gummischeiben über eine obere Abdeckplatte, tunlichst luftdicht, abgeschlossen, wobei dieses Abschliessen nur im Bereich der druckbeaufschlagten Kammern ein unbedingtes Erfordernis darstellt.

Die Abdeckplatten derartiger Zuspeiser werden normalerweise mittels vier umfänglich verteilter Federn bzw. Gummipolstern bewerkstelligt, so dass eine mehr oder weniger gleichmässige Dichtungskraft über die ganze Auflagefläche der Dichtungsplatte entsteht.

Eine andere Ausführung benützt zum Abspannen der dichtenden Platte einen am Gehäuse angelenkten Bügel, welcher die Platte auf zwei diametral gegenüberliegenden Punkten erfasst und auf die darunterliegende Gummiplatte presst. Auch diese Ausführung bewirkt eine einigermassen gleichmässig belastete Druckauflagefläche der abgespannten Platte.

Aus der DE 34 23 870 A1 ist ein im wesentlichen punktförmiges auf eine Abschlussplatte wirkendes hydraulisches Kraftelement bekannt, welches die Dichtungsplatten unten und oben dichtend auf den Rotor presst. Dieses System dichtet zwar sehr gut und ist durch die Hydraulik auch selbstregelnd, die Abnützung der Dichtplatten ist aber sehr hoch und damit müssen diese sehr oft ersetzt werden.

### Darstellung der Erfindung

Der Erfindung liegt die Aufgabe zugrunde, bei einer Spannvorrichtung für einen Zuspeiser der eingangs genannten Art die Abnützung der Dichtplatten zu verringern.

Erfindungsgemäss wird dies durch die Merkmale des ersten Anspruches erreicht.

Kern der Erfindung ist es also, dass zumindest in Teilbereichen die Rotorscheiben, Deck- und Gegenscheibe mittels mindestens eines Druckelementes in Abhängigkeit vom Gegendruck zusammengepresst sind.

Die Vorteile der Erfindung sind unter anderem darin zu sehen, dass dass sich eine besonders langlebige Zuspeisereinheit ergibt. Dies bedeutet, dass die Deckscheibe und Gegenscheibe sowie Rotorscheibe im Vergleich zu herkömmlichen Systemen sehr viel später ausgetauscht werden müssen, so dass diese Kombination sehr kostengünstig ist.

Weitere vorteilhafte Ausgestaltungen der Erfindung ergeben sich aus den Unteransprüchen und der Beschreibung.

### Kurze Beschreibung der Zeichnungen

Im folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien ist mit Pfeilen angegeben.

Es zeigen:
- Fig. 1: eine perspektivische Explosionsdarstellung der wichtigsten Teile eines Materialzuspeisers;
- Fig. 2: eine Draufsicht und eine Seitenansicht der Rotorscheibe des Rotors des Materialzuspeisers;
- Fig. 3: eine Seitenansicht eines erfindungsgemässen Materialzuspeisers;
- Fig. 4: eine weitere teilweise Seitenansicht des erfindungsgemässen Materialzuspeisers aus Fig. 3;
- Fig. 5: eine weitere teilweise Seitenansicht eines weiteren erfindungsgemässen Materialzuspeisers;
- Fig. 6: Diagramm des Gegendruckes für Trockenspritzen mit Schlauchdurchmesser 50 mm;
- Fig. 7: Diagramm des Gegendruckes für Nassspritzen mit Schlauchdurchmesser 50 mm.

Es sind nur die für das unmittelbare Verständnis der Erfindung wesentlichen Elemente gezeigt. Nicht dargestellt sind von der Anlage beispielsweise der Kompressor, die weiteren Teile des Materialzuspeisers, Zuführvorrichtung für das Material, Schläuche, usw.

### Wege zur Ausführung der Erfindung

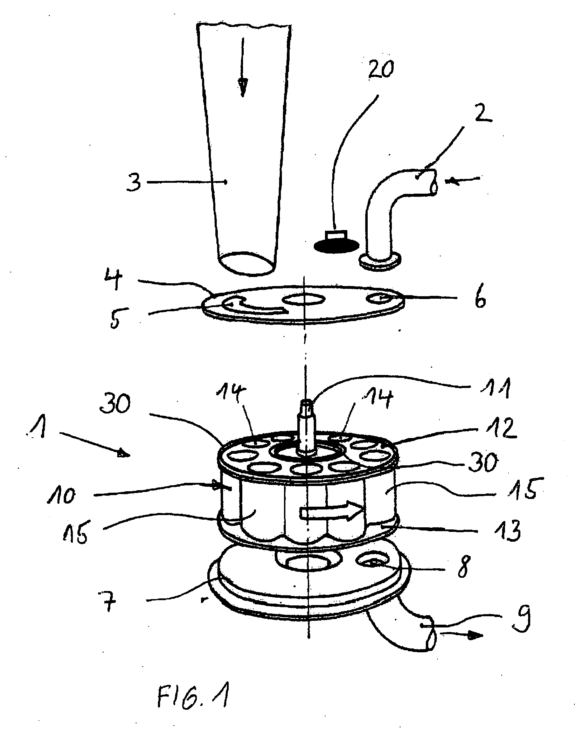

Materialzuspeiser, im folgenden auch nur Zuspeiser genannt, sind beispielsweise aus der DE 34 23 870 A1 und der CH 579 697 bekannt und sind aus diesen Schriften ersichtlich. In Fig. 1 sind die wichtigsten Teile eines solchen Materialzuspeisers 1 dargestellt. Über einen Druckluftanschluss 2 wird dem Zuspeiser Druckluft über einen nicht dargestellten Kompressor zugeführt. Mittels eines Zuführtrichters 3 wird dem Zuspeiser das zu verarbeitende Material zugeführt. Diese Elemente stehen in Verbindung mit einer Deckscheibe 4, welche einen Aufgabeschlitz 5 für das Material und eine Öffnung 6 für die Druckluft aufweist. Der Zuführtrichter 3 und der Druckluftanschluss 2 können direkt mit der Deckscheibe 4 verbunden sein oder mit einer weiteren darüber angeordneten Deckscheibe. Eine zur Deckscheibe analoge Gegenscheibe 7 ist auf der Unterseite des Zuspeisers angeordnet, welche mit einer Öffnung 8 für eine Transportleitung 9 versehen ist. Die Transportleitung 9 kann direkt mit der Gegenscheibe 7 verbunden sein oder mit einer weiteren darunter angeordneten Gegenscheibe. Zwischen den feststehenden Scheiben 4 und 7 ist ein Rotor 10 angeordnet. Der Rotor 10 wird über eine Welle 11 mittels eines nicht dargestellten Motors angetrieben: Der Rotor weist eine obere Rotorscheibe 12 und eine untere Rotorscheibe 13 auf. Diese Rotorscheiben weisen Öffnungen 14 auf, über die in Figur 1 schlauchförmig ausgeformten Kammern 15 des Rotors 10 mit Material über den Aufgabeschlitz 5 befüllt werden können. Durch eine nicht dargestellte Zuführvorrichtung und den Trichter kann Material, beispielsweise Spritzbeton, durch den Schlitz 5 in die unter dem Schlitz befindliche Öffnung 14 und damit die Kammer 15 zugeführt werden. Während des Füllens der Kammer dreht sich der Rotor und damit die Öffnung 14, so dass durch die Drehung die nächste Kammer 15 befüllt wird. Die untere Gegenscheibe 7 schliesst die unteren Öffnungen 14 und somit die Kammern 15 nach unten ab, bis die Öffnung 14 durch die Drehung des Rotors über die Öffnung 8 in der Gegenscheibe 7 zu liegen kommt. Dann erfolgt die Entleerung der Kammer 15 in die Transportleitung 9 mittels der durch den Druckluftanschluss 2, Öffnung 6, geförderten Druckluft, auch Oberluft genannt. Weiter weist der Zuspeiser ein Druckelement 20 auf, die Rotorscheiben 12 und 13 weisen Dichtelemente 30 auf, welche im folgenden genauer beschrieben werden.

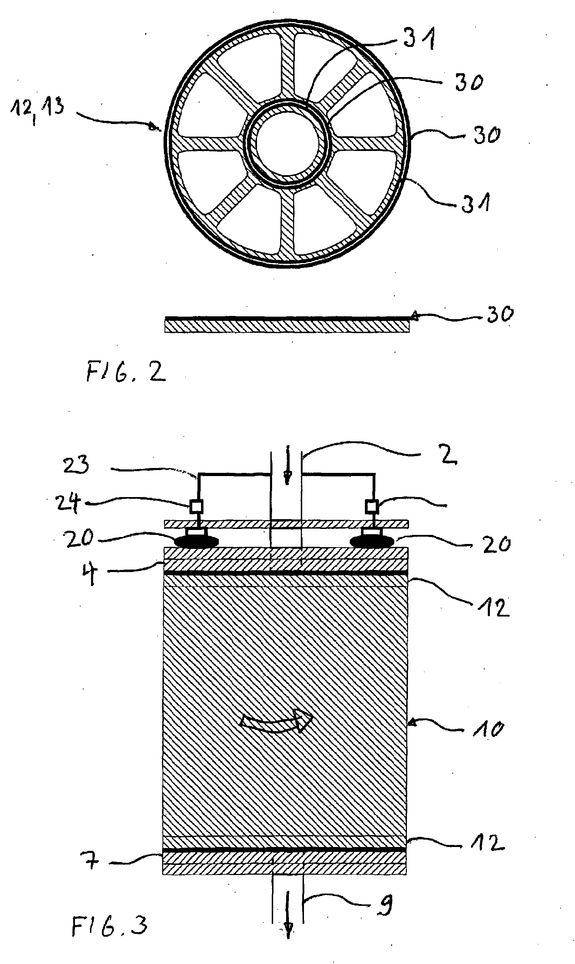

In Fig. 2 ist die Rotorscheibe 12, 13 des Rotors genauer dargestellt. Aus der Figur ist ersichtlich, dass die Öffnung 14 dabei nicht rund sein müssen, sondern auch konisch oder in anderer Weise ausgeführt werden können. Die Kammern 15 können dann analog zur Ausgestaltung der Öffnung 14 ausgeformt werden. Die Rotorscheibe selber besteht vorzugsweise aus einem hochverschleissfesten Material, insbesondere aus einem hochverschleissfesten Stahl. Auf der Rotorscheibe sind stirnseitig innen und aussen ringförmige Dichtelemente 30 zur Deck- und Gegenscheibe hin angeordnet. Durch diese Dichtelemente werden die Kammern 15 des Rotors gegenüber der Deckscheibe und der Gegenscheibe abgedichtet, so dass keine Druckluft nach Innen zur Welle hin oder nach aussen entweicht.
Die Dichtelemente 30 bestehen aus einem weicheren Material als dasjenige der Rotorscheibe. Sie bestehen vorzugsweise aus einem Elastomer, insbesondere Kautschuk, Silikon, Polyurethan, usw. Sie können jedoch auch aus einem weicheren Metall, wie z.B. Aluminium gefertigt werden. Im Dichtelement 30 ist eine Nut 31 vorgesehen, welche zur Aufnahme von Schmiermittel dient. Als Schmiermittel wird vorzugsweise Fett verwendet. Das Schmiermittel wird über nicht dargestellte Öffnungen in der Deckscheibe und der Gegenscheibe beispielsweise mittels einer Fettschmierpumpe in die Nuten 31 zugeführt.
Die Deckscheibe und die Gegenscheibe bestehen in der hier vorliegenden Erfindung auch aus einem hochverschleissfesten Material, insbesondere aus einem hochverschleissfesten Stahl. Dies im Gegensatz zu herkömmlichen Deckscheiben und Gegenscheiben, die aus einem elastomeren Material bestehen. Vorzugsweise besteht dabei die Deckscheibe und die Gegenscheibe sowie die Rotorscheiben aus dem gleichen hochverschleissfesten Material, es könne jedoch auch unterschiedliche Materialien verwendet werden. Durch die hier vorliegende Material- / Dichtkombination von hochverschleissfesten Material für Deckscheibe und Gegenscheibe sowie Rotorscheibe und an der Rotorscheibe, stirnseitig des Rotors, angeordneten Dichtelementen ergibt sich eine besonders langlebige Zuspeisereinheit. Dies bedeutet, dass die Deckscheibe und Gegenscheibe sowie Rotorscheibe im Vergleich zu herkömmlichen Systemen sehr viel später ausgetauscht werden müssen, so dass diese Kombination sehr kostengünstig ist.

In den Figuren 3, 4 und 5 sind die Druckelemente 20 genauer dargestellt.
Diese Druckelemente wirken analog des in der DE 34 23 870 A1 beschriebenen Kraftelementes und die Spannvorrichtung kann grundsätzlich entsprechend der dort gezeigten Lehre ausgeführt werden. Die Druckelemente 20 stützen sich dabei auf einer Gegenplatte 21 ab, welche am Zuspeiser mittels Spannelementen 22 befestigt ist. Mittels dieser Spannelemente kann die relative Lage der Gegenplatte bezüglich Deck- und Gegenscheibe und Rotor eingestellt werden, respektive wenn diese entfernt werden die Deck- und Gegenscheibe und der Rotor entnommen werden. Durch die Druckelemente 20 werden somit die Deck- und Gegenscheibe und der Rotor, respektive die Rotorscheiben mit ihren Dichtelementen zusammengedrückt, so dass keine Luft aus dem Rotor entweichen kann. Vorzugsweise werden zwei Druckelemente verwendet, welche in der Nähe des Druckluftanschlusses angeordnet werden, bevorzugt symmetrisch zum Druckluftanschluss 2. Es kann jedoch auch nur ein Druckelement oder mehr als zwei verwendet werden.

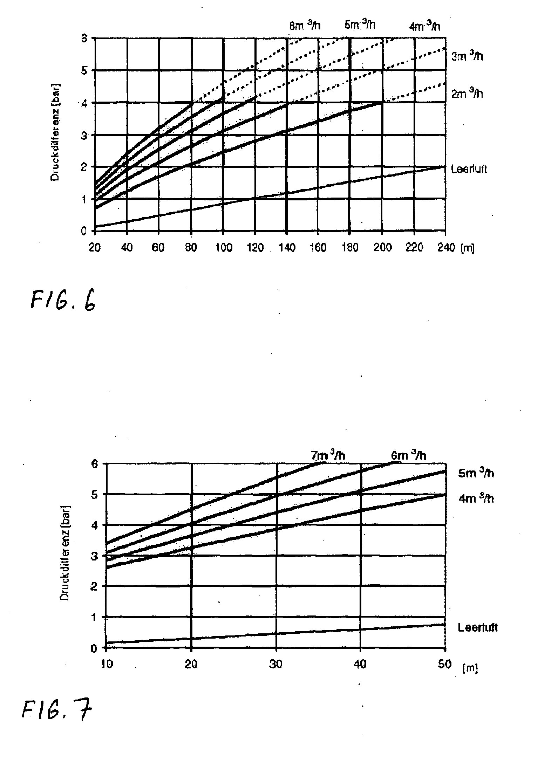

Erfindungsgemäss werden die Druckelemente 20 mittels des Gegendruckes im Druckluftanschluss 2 gesteuert. In Figur 6 ist dieser Gegendruck exemplarisch für Trockenspritzen und einem Schlauch der Transportleitung mit einem Durchmessers von 50 mm dargestellt, respektive in Figur 7 für Nassspritzen und einem Schlauch der Transportleitung mit einem Durchmessers von 50 mm. Entsprechend dem Diagramm entspricht der Druck bei einer Schlauchlänge von 120m und Leerluft ungefähr einem bar, falls 2 m3/h Trockenbeton gefördert werden steigt der Druck auf ungefähr drei bar, bei 4 m3/h auf,über 4 bar. Analoges ergibt sich für das Nassspritzen, wobei hier jedoch höhere Drücke für die gleiche Förderleistung entstehen. Dabei liefert der Kompressor über den Druckluftanschluss 2 immer den gleichen Druck. Diese Gegendrücke variieren dabei je nach Maschine, Fördergut, Schlauchlänge, usw., und sind hier nur zur Illustration angegeben. Wichtig ist, dass der Druck in den Druckelementen analog dieses Gegendruckes ansteigt oder abfällt, so dass bei geringem Gegendruck die Deck- und Gegenscheibe und der Rotor, respektive die Rotorscheiben, nur mit geringem Druck zusammengepresst werden und bei hohem Gegendruck die Deck- und Gegenscheibe und der Rotor, respektive die Rotorscheiben, mit hohem Druck zusammengepresst werden. Besonders vorteilhaft ist es, dass beim Anfahren des Rotors kein Anpressdruck vorhanden ist, und damit kein Anfressen der Deck- und Gegenscheibe mehr erfolgt.

In Figur 3 wird dazu mittels einer Leitung 23 Druckluft aus dem Druckluftanschluss 2 entnommen und über ein Ventil 24 dem Druckelement 20 zugeführt. Das Druckelement 20 ist hier als Balgzylinder ausgeführt, wie er z.B. von Festo erworben werden kann. Es kann aber auch ein beliebiges anderes pneumatisch wirkendes Druckelement verwendet werden. Über das Ventil 24 kann der Druck im Balgzylinder im Vergleich zum Gegendruck verändert werden, so dass der Druck im Balgzylinder vom Gegendruck abweichen kann. Steigt jedoch der Gegendruck, so steigt auch der Druck im Balgzylinder und analog fällt der Druck im Balgzylinder, wenn der Gegendruck fällt.

Wenn mehrere Druckelemente verwendet werden ist es besonders vorteilhaft, wenn die Druckelemente untereinander eine unterschiedliche Druckkraft aufweisen. So ist es vorteilhaft, wenn das Druckelement, welches in der Figur 3 links dargestellt ist und bei von links nach rechts drehendem Rotor zuerst beaufschlagt wird, eine geringere Druckkraft im Verhältnis zum rechts angeordneten Druckelement aufweist. Dadurch kann der Abrieb der Deck- und Gegenscheibe und der Rotorscheiben weiter vermindert werden.

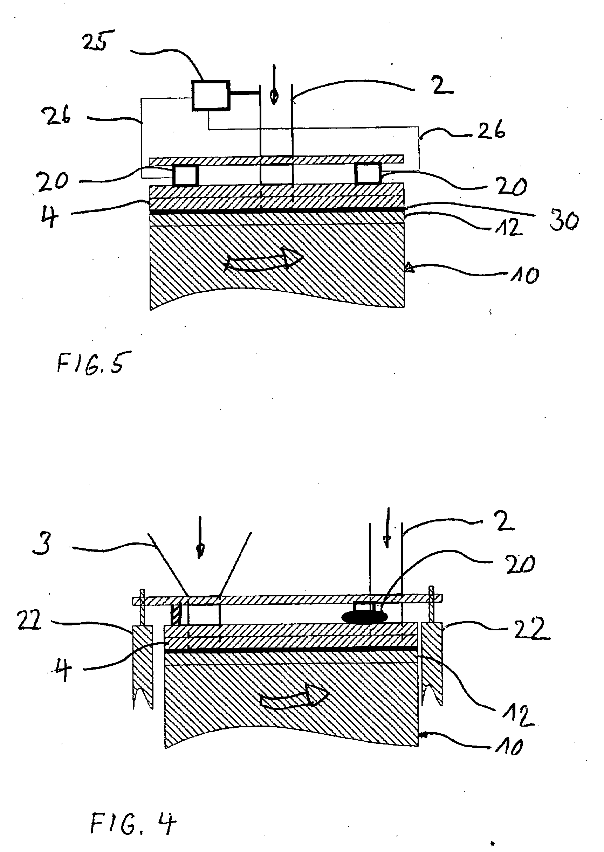

Nach Figur 5 kann der Gegendruck aus dem Druckluftanschluss 2 auch mittels eines Mess- und Steuergerätes 25 gemessen werden, die entsprechenden Drücke, welche über die Druckelemente übertragen werden sollen, berechnet werden und diese kabellos oder mittels Leitungen 26 an die Druckelemente 20 übermittelt werden. Diese Leitungen können elektrisch, hydraulisch oder pneumatisch sein und somit die Druckelemente selber elektromechanisch, hydraulisch oder pneumatisch.

Selbstverständlich ist die Erfindung nicht auf das gezeigte und beschriebene Ausführungsbeispiel beschränkt. Die hier beschriebene Material- / Dichtkombination von hochverschleissfesten Material für Deckscheibe und Gegenscheibe sowie Rotorscheibe und an der Rotorscheibe, stirnseitig des Rotors, angeordneten Dichtelementen kann unabhängig von den beschriebenen Druckelementen sowie diese unabhängig von der hier beschriebenen Material- / Dichtkombination verwendet werden. Eine Kombination dieser Element bringt aber ein besonders vorteilhaftes System, welches viel weniger Wartung benötigt als herkömmliche Zuspeiser.

### Bezugszeichenliste

- 1: Materialzuspeiser
- 2: Druckluftanschluss
- 3: Trichter
- 4: Deckscheibe
- 5: Aufgabeschlitz
- 6: Öffnung Druckluft
- 7: Gegenscheibe
- 8: Öffnung für 9
- 9: Transportleitung
- 10: Rotor
- 11: Welle
- 12: Rotorscheibe oben
- 13: Rotorscheibe unten
- 14: Öffnung
- 15: Kammer
- 20: Druckelement
- 21: Gegenplatte
- 22: Spannelement
- 23: Leitung
- 24: Ventil
- 25: Mess- und Steuergerät
- 30: Dichtelement
- 31: Nut

## Patentansprüche

1. Spannvorrichtung für einen Zuspeiser (1) umfassend einen Rotor (10), Rotorscheiben (12, 13), Deck- (4) und Gegenscheibe (7), wobei mittels eines Druckluftanschlusses (2) dem Zuspeiser Druckluft zugeführt wird, und wobei bei der Speisung von Material im Zuspeiser im Druckluftanschluss ein Gegendruck entsteht,
**dadurch gekennzeichnet,**
**dass** zumindest in Teilbereichen die Rotorscheiben (12, 13), Deck- (4) und Gegenscheibe (7) mittels mindestens eines Druckelementes (20) in Abhängigkeit vom Gegendruck zusammengepresst sind.

2. Spannvorrichtung nach Anspruch 1,
**dadurch gekennzeichnet,**
**dass** die Druckluft im Druckelement (20) direkt dem Druckelement zugeführt wird, oder dass das Druckelement (20) mittels eines Mess-und Steuergerätes (25) angesteuert wird.

3. Spannvorrichtung nach Anspruch 1 oder 2,
**dadurch gekennzeichnet,**
**dass** das Druckelement elektromechanisch, hydraulisch oder pneumatisch ist.

4. Spannvorrichtung nach einem der vorhergehenden Ansprüche,
**dadurch gekennzeichnet,**
**dass** bei der Verwendung von mindestens zwei Druckelementen (20) diese untereinander eine unterschiedlichen Druckkraft aufweisen.

5. Spannvorrichtung nach Anspruch 4,
**dadurch gekennzeichnet,**
**dass** das vom Rotor zuerst beaufschlagte Druckelement eine geringere Druckkraft im Verhältnis zum in Drehrichtung des Rotors folgenden Druckelement aufweist.
